# EUROPEAN PATENT SPECIFICATION

(11) **EP 3 392 214 B1**
(45) Date of publication and mention of the grant of the patent: **04.11.2020**
(21) Application number: 16874539.6
(22) Date of filing: 16.08.2016
(51) Int. Cl.: C03B 23/24, C03C 27/08

(54) **METHOD FOR MANUFACTURING TEMPERED VACUUM GLASS AND PRODUCTION LINE THEREFOR**
VERFAHREN ZUR HERSTELLEN EINES GEHÄRTETEN GLASES UND FERTIGUNGSSTRASSE DAFÜR
PROCÉDÉ DE FABRICATION DE VERRE SOUS VIDE TREMPÉ ET LIGNE DE PRODUCTION ASSOCIÉE

(30) Priority: 15.12.2015 CN 201510939968
(43) Date of publication of application: 24.10.2018
(73) Proprietor: Luoyang Landglass Technology Co., Ltd., Henan 471000 (CN)
(72) Inventor: ZHAO, Yan, Luoyang Henan 471000 (CN)
(74) Representative: Grünecker Patent- und Rechtsanwälte PartG mbB
(86) International application number: PCT/CN2016/095466
(87) International publication number: WO 2017/101479

(56) References cited:
- CN-A- 102 079 619
- CN-A- 103 241 929
- CN-A- 104 743 842
- CN-A- 104 743 842
- CN-A- 105 541 132
- CN-A- 105 565 683
- CN-B- 102 531 361
- DE-U1-202010 007 079
- GB-A- 1 150 942
- JP-A- S60 226 419
- US-A- 2 938 494
- US-B1- 7 204 102
- US-B1- 7 204 102

## Description

### BACKGROUND

### Technical Field

The present invention belongs to the field of vacuum glass manufacturing, and particularly relates to a method for manufacturing tempered vacuum glass and a tempered vacuum glass production line based on the manufacturing method.

### Related Art

Due to the excellent thermal insulation, sound insulation and energy saving effects, vacuum glass represents the development direction of the next generation of energy-saving architectural glass, and it has been widely promoted and applied. The earliest research on vacuum glass originated in the 1990s. For example, the Australian patent application No. AU94192667.2 discloses a method for manufacturing vacuum glass, which pioneered the research of vacuum glass. Subsequently, some research was conducted domestically and abroad on this technology. However, due to technological reasons, the manufactured vacuum glass is non-tempered vacuum glass and does not meet the standards for architectural safety glass, which greatly hinders the application of vacuum glass in high-rise buildings and in some special occasions. How to manufacture tempered vacuum glass has become the focus of competing research at home and abroad. In response to this, the applicant proposed a glass plate composite sealing method in Chinese Patent No. 201010508421.7. The method utilizes a low-melting-point metal to seal the periphery of the vacuum glass, and successfully solves the worldwide problem that other sealing processes can easily cause the de-tempering of the tempered glass substrate, thereby realizing the manufacturing of the tempered vacuum glass, and promoting the progressive development and wide application of vacuum glass.

DE 20 2010 007079 U1 discloses a method wherein glass plates are sealed with help of metal sealing strips extending beyond the edge of the glass plates using laser / ultrasonic within a vacuum chamber and a device therefor. Further, it discloses a device for heating a glass plate with a first group of heaters located beneath the rollers of a conveying device
and a second edge heater for creating different temperatures in different regions on a glass plate, before the glass plates are connected with metal strips.

CN104743842 A discloses a method for manufacturing double- or tripple-layered vacuum glass with sealing grooves on each of the upper side of the glass plates except the upper most glass plate. Broader temperature ranges such as 150°C - 450°C for pre-heating are disclosed relating to glass solder, but not for metal solder. Using a metal soldering material is mentioned generally without specific temperature setting, and specifically in embodiments at tempertures above 300°C. The melt solder solidifies slowly in cooling chamber with a temperature 100°C - 200°C lower than its melting point.

US 7,204,102 B1 discloses a method for manufacturing tempered vacuum glass, wherein indium or indium alloy are used as a soldering material with a melting temperature of e.g. 157°C. The combined glass plates are heated uniformly at a temperature of or below 220°C to form a seal.

US 2, 938,494 A relates to a production line of glass assembly comrpsing multiple glass sheets, wherein the sheets are provided with metalized layer and connected with an intermediate metal strip between them using solders.

When manufacturing the tempered vacuum glass, the basic sealing strength of two glass plates is an important performance parameter of the tempered vacuum glass. Continuously breaking through the barriers of the prior art, providing more complete solutions, and promoting the development of the tempered vacuum glass industry are the goals pursued by those skilled in the art. Therefore, how to improve the sealing strength has become a constant search target by those skilled in the art.

### SUMMARY

In practical application, the applicant has found that the stress is generated after cooling and solidification due to the difference in the expansion coefficients of the solder and the metalized layer at the time of sealing. In view of the problems in the prior art, the first object of the present invention is to provide a method for manufacturing a tempered vacuum glass, which can greatly reduce the stress generated when sealing between two glass substrates

and increase the connection strength, thereby implementing continuous high-efficiency production of the tempered vacuum glass and lowering the production cost; and the second object of the present invention is to provide a continuous automatic production line of tempered vacuum glass, which provides equipment guarantee for mass production.

In order to achieve the above objects, the present invention discloses a method for manufacturing tempered vacuum glass according to claim 1 and a production line for manufacturing tempered vacuum glass according to claim 7. According thereto an air extraction opening is provided, in advance, on at least one glass substrate for constituting the tempered vacuum glass. The manufacturing method comprises the following steps:
(1) preparing a metalized layer in a to-be-sealed region on the glass substrate, and tempering or heat-reinforcing the glass substrates;
(2) placing a metal solder on the metalized layer;
(3) preheating and superposing the glass substrates, by one of the following methods:
   a. respectively heating the two glass substrates to 60°C to 150°C, disposing the metalized layers of the to-be-sealed regions of the two glass substrates opposite to each other, and superposing the glass substrates such that the metal solder is located between the metalized layers of the to-be-sealed regions; and
   b. disposing the metalized layers of the to-be-sealed regions of the two glass substrates opposite to each other, superposing the glass substrates such that the metal solder is located between the metalized layers of the to-be-sealed regions, and integrally heating the two superposed glass substrates to 60°C to 150°C;
(4) hermetically sealing the to-be-sealed regions by a metal brazing process to form a tempered glass assembly, , wherein the metal brazing process is adopted to perform local heating on the to-be-sealed region; wherein the heating mode is laser heating, flame heating, current heating, induction heating, microwave heating, radiation heating or convection heating;
(5) heating the tempered glass assembly to 100°C to 230°C;
(6) vacuumizing an inner cavity of the tempered glass assembly to a predetermined vacuum degree; and
(7) closing the air extraction opening and completing the manufacturing process of the vacuum glass.

Further, before step (4), the overall temperature of the two superposed glass substrates is maintained at 60°C to 150°C.

Further, the heating temperature in step (3) is 80°C to 120°C.

Further, when the glass substrate is a coated glass substrate, a film in the to-be-sealed region of the coated glass substrate is removed before the metalized layer is preformed.

Further, in step (1), a step of preparing a support for supporting the inner cavity is further included: firstly, a paste-like glass glaze is printed on predetermined positions on one of the glass substrates to form a dot-like bulge array; and then, the glass glaze is sintered, by a high-temperature sintering process, into the support that is consolidated with the glass substrate.

Further, a step of placing the support before the two glass substrates are superposed is further included: the solid support is placed in a predetermined position on one of the glass substrates.

Further, in step (4), the metal brazing process is adopted to perform local heating on the to-be-sealed region, wherein the heating mode is laser heating, flame heating, current heating, induction heating, microwave heating, radiation heating or convection heating.

Further, in step (7), the tempered glass assembly is vacuumized in a vacuum chamber, wherein the tempered glass assembly is heated to 100°C to 230°C during vacuumizing.

Further, before the two glass substrates are superposed in step (3), a getter is placed on at least one of the glass substrates, and the getter is activated after step (6) is completed.

Further, in step (1), a metalized layer is further preformed on the periphery of the air extraction opening, and before step (7), a closing sheet on which a metal solder is preplaced is covered on the air extraction opening, and the air extraction opening is closed by melting the metal solder preplaced on the closing sheet.

A tempered vacuum glass production line based on the above manufacturing method, the production line comprising a metalized layer preparation device, a solder placement device, a first preheater, a superposing device, a soldering edge sealing device, a second preheater, a vacuumizing system and a closing device which are sequentially connected through a first conveyor; wherein, the glass substrates are heated by the first preheater to 60°C to 150°C, and subjected to edge sealing treatment by the soldering edge sealing device, there being one or multiple soldering edge sealing devices, and the vacuumizing system comprising one or multiple vacuum chambers and an air extractor communicating with the vacuum chamber.

A tempered vacuum glass production line based on the above manufacturing method, the production line comprising a metalized layer preparation device, a solder placement device, a superposing device, a first preheater, a soldering edge sealing device, a second preheater, a vacuumizing system and a closing device which are sequentially connected through a first conveyor; wherein, the glass substrates are heated by the first preheater to 60°C to 150°C, and subjected to edge sealing treatment by the soldering edge sealing device, there being one or multiple soldering edge sealing devices, and the vacuumizing system comprising one or multiple vacuum chambers and an air extractor communicating with the vacuum chamber.

Further, the first preheater and/or the second preheater are/is a radiation-type glass plate heating furnace or a convection-type glass plate heating furnace.

Further, the superposing device comprises a lifting mechanism disposed on one side of the first conveyor, the lifting mechanism being provided with a lifting arm, the lifting arm being provided with a turnover mechanism, and a vacuum suction cup or clamping device being disposed in the turnover mechanism; and when the superposing device is in operation, the vacuum suction cup or clamping device captures the second glass substrate, and the lifting mechanism lifts a second glass substrate to a predetermined height, turns it over, and places it on a first glass substrate after the turnover to complete the superposing.

Further, a side surface of the first conveyor is provided with a second conveyor, the first conveyor being used for conveying the first glass substrate, and the second conveyor being used for conveying the second glass substrate.

Further, the superposing device comprises a rotating shaft disposed between the first and second conveyors, and a swing arm connected with the rotating shaft and inserted under the second glass substrate along a gap of the second conveyor, the swing arm being provided with a vacuum suction cup or clamping device; and in operation, the vacuum suction cup or clamping device captures the second glass substrate, turns over the swing arm around the rotating shaft, and places the second glass substrate on the first glass substrate on the first conveyor to complete the superposing.

Further, the superposing device comprises a suspended transmission device disposed above the first conveyor, the suspended transmission device being used for conveying the second glass substrate, the suspended transmission device comprising a conveying mechanism, and the conveying mechanism being provided with a lifting device with a vacuum suction cup or clamping device; and in operation, the lifting device descends, the vacuum suction cup or clamping device captures and fixes the second glass substrate on the first conveyor, the lifting device ascends, the second glass substrate is conveyed to above the first glass substrate to be superposed, and the second glass substrate is placed on the first glass substrate to complete the superposing.

Further, the superposing device comprises a multi-degree-of-freedom mechanical arm disposed on one side of the first conveyor, the mechanical arm being provided with a vacuum suction cup or clamping device; and when the superposing device is in operation, the vacuum suction cup or clamping device captures the second glass substrate, and the second glass substrate is turned over and placed on the first glass substrate to complete the superposing.

Further, the production line is further provided with a support placement device, the support placement device being disposed at a station between the metalized layer preparation device and the soldering edge sealing device.

Further, the production line is further provided with a support placement device, the support placement device being disposed at a station between the solder placement device and the superposing device.

Further, the production line further comprises a support preparation device disposed between the metalized layer preparation device and the solder placement device, the support preparation device comprising a screen printing device, a drying device and a sintering device.

The soldering edge sealing device is a laser heating device, microwave heating device, flame heating device, induction heating device or convection heating device.

Further, when there is one soldering edge sealing device, the soldering edge sealing device is disposed on one side of the first conveyor, the conveying direction of the soldering edge sealing device being perpendicular to the conveying direction of the first conveyor.

Further, when there is one soldering edge sealing device, the soldering edge sealing device is disposed on the first conveyor, the conveying direction of the soldering edge sealing device being the same as the conveying direction of the first conveyor.

Further, when there are multiple soldering edge sealing devices, the soldering edge sealing devices are disposed on one or both sides of the first conveyor, the conveying direction of the soldering edge sealing devices being perpendicular to the conveying direction of the first conveyor.

Further, the production line further comprises a glass tempering device, the glass tempering device being disposed at a station between the metalized layer preparation device and the solder placement device.

Further, the metalized layer preparation device comprises a screen printing device, a drying device and a sintering device.

Further, the production line further comprises a getter activation device disposed in the sequentially connected along the glass conveying direction; and the closing device is disposed inside the vacuum chamber.

According to a method for manufacturing tempered vacuum glass in accordance with the present invention, the glass substrates are heated to 60°C to 150°C before sealing and then are brazed for edge sealing, thereby greatly reducing the stress when sealing the two glass substrates, enhancing the soldering strength, and extending the service life of the tempered vacuum glass. In addition, the present invention further discloses a tempered vacuum glass production line based on the manufacturing method.

### BRIEF DESCRIPTION OF THE DRAWINGS

FIG. 1 is a schematic diagram of Embodiment 1 of the present invention;
FIG. 2 is a schematic diagram of Embodiment 2 of the present invention;
FIG. 3 is a schematic diagram of Embodiment 3 of the present invention;
FIG. 4 is a schematic diagram of Embodiment 4 of the present invention;
FIG. 5 is a schematic diagram of Embodiment 5 of the present invention;
FIG. 6 is a schematic diagram of Embodiment 6 of the present invention;
FIG. 7 is a superposing schematic diagram of a superposing device 3 in FIG. 6;
FIG. 8 is a schematic diagram of Embodiment 7 of the present invention;
FIG. 9 is a superposing schematic diagram of a superposing device 3 in FIG. 8;
FIG. 10 is a schematic diagram of a metalized layer preparation device 1; and
FIG. 11 is a schematic diagram of a support preparation device 8.

### DETAILED DESCRIPTION

The specific embodiments of the present invention will be described in detail below with reference to the accompanying drawings.

### Embodiment 1

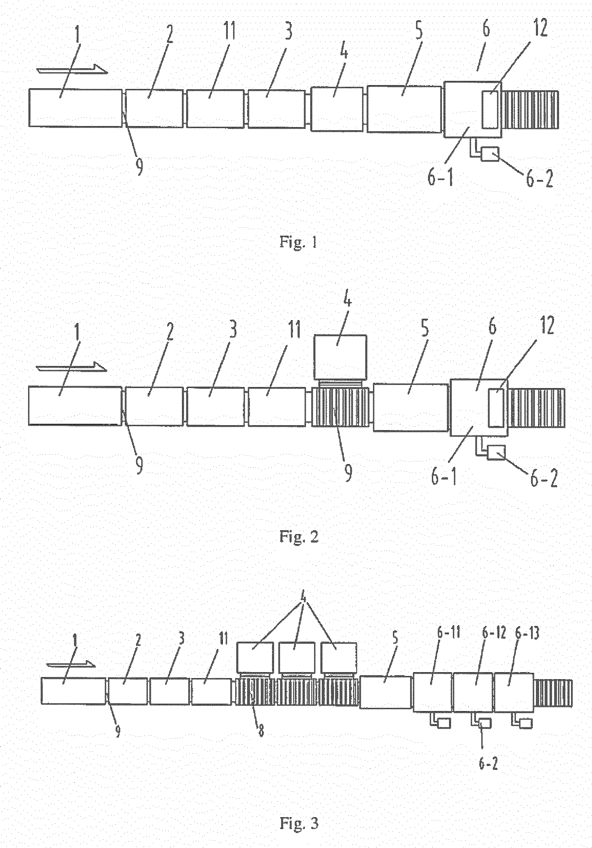

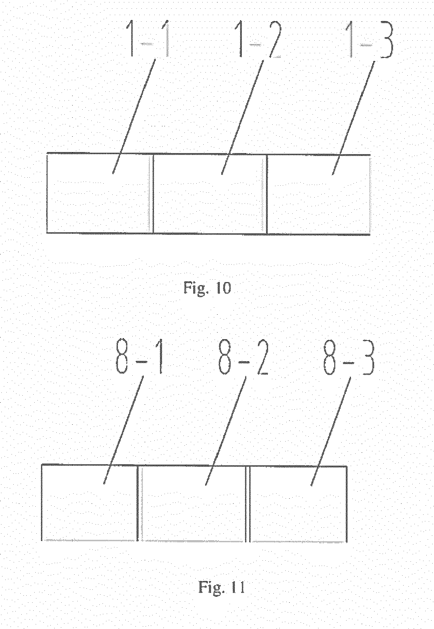

FIG. 1 and FIG. 10 show a first embodiment of a tempered vacuum glass production line of the present invention. In the present embodiment, the production line specifically comprises a first conveyor 9, such as a conveying roller bed, and a metalized layer preparation device 1, a solder placement device 2, a first preheater 11, a superposing device 3, a soldering edge sealing device 4, a second preheater 5, a vacuumizing system 6 and a closing device 12 which are sequentially connected through the first conveyor 9; wherein the first preheater 11 is used for respectively heating the glass substrates to 60°C to 150°C before the glass substrates are superposed, and then the soldering edge sealing device 4 performs edge sealing treatment. Of course, the first preheater 11 may also be disposed at the next station of the superposing device 3 to integrally heat the superposed glass substrates to 60°C to 150°C. The closing device 12 is disposed in the vacuumizing system, the vacuumizing system 6 comprises a vacuum chamber 6-1, an inlet end and an outlet end of the vacuum chamber 6-1 are respectively provided with a vacuum valve, an air extractor 6-2 is connected with the vacuum chamber 6-1, and a getter activation device is disposed in the vacuum chamber 6-1.

The metalized layer preparation device 1 comprises a screen printing device 1-1, a drying device 1-2 and a sintering device 1-3. The drying device 1-2 and the sintering device 1-3 are an integrated device. The sintering device 1-3 is a glass tempering device.

The first preheater 11 and/or the second preheater 5 are/is a radiation-type glass plate heating furnace or a convection-type glass plate heating furnace.

The tempered vacuum glass comprises two glass substrates, an air extraction opening is provided, in advance, on one of the glass substrates, or an air extraction opening is provided, in advance, on each of the two glass substrates. The method for manufacturing tempered vacuum glass on the production line in Embodiment 1 specifically comprises the following steps:
(1) The periphery of the glass substrate is a band-shaped to-be-sealed region, the metalized layer preparation device 1 is utilized to prepare a metalized layer in the to-be-sealed region, and the glass substrate is tempered or heat-reinforced; and the detailed steps for preparing the metalized layer have been disclosed in the applicant's earlier patent application and will not be described here.
(2) A metal solder is placed on the metalized layer by using the solder placement device 2.
(3) The glass substrates are preheated and superposed, by one of the following methods:
   a. firstly, the two glass substrates are respectively heated to 60°C to 150°C by the first preheater 11; then the metalized layers of the two glass substrates are disposed opposite to each other by the superposing device 3, and the glass substrates are superposed such that the metal solder is located between the metalized layers; for the superposing device 3, references are made to Chinese Patent No.201420110435.7, the superposing device mainly comprises a lifting mechanism, such as a sprocket lifting mechanism, a servo piston cylinder lifting mechanism or the like, disposed on one side of the conveyor, the lifting mechanism is provided with a lifting arm inserted under the upper glass substrate along the roller gap, the lifting arm is provided with a turnover mechanism, and a vacuum suction cup is disposed in the turnover mechanism; in operation, the vacuum suction cup captures the passing upper glass substrate, and the lifting mechanism lifts the upper glass substrate to a predetermined height, turns it over, and places it on the passing lower glass substrate to complete the superposing; and
   b. firstly, the metalized layers of the two glass substrates are disposed opposite to each other by the superposing device 3, and the glass substrates are superposed such that the metal solder is located between the metalized layers; secondly, the two superposed glass substrates are integrally heated to 60°C to 150°C by the first preheater 11;
   preferably, the above-mentioned heating temperature is 80°C to 120°C.
(5) Within the heating temperature range in step (4), the metal solder is heated by using a soldering edge sealing device 4 by a metal brazing process such that it is melted and solidified, and the metalized layers of the two glass substrates are hermetically sealed to form a tempered glass assembly, thereby greatly reducing the stress between the two glass substrates during sealing. The metal brazing process is adopted to perform local heating on the to-be-sealed region, the heating mode is laser heating, flame heating, current heating, induction heating, microwave heating, radiation heating or convection heating. The soldering edge sealing device 4 is a laser heating device, microwave heating device, flame heating device, induction heating device or convection heating device. In the present embodiment, there is one soldering edge sealing device 4, the soldering edge sealing device 4 is disposed on the first conveyor 9, and the conveying direction of the soldering edge sealing device 4 is the same as the conveying direction of the first conveyor 9.
(6) The tempered glass assembly is heated to 100 °C to 230°C by the second preheater 5 before vacuumizing so as to enhance the exhausting efficiency and exhausting effect.
(7) An inner cavity of the tempered glass assembly is vacuumized to a predetermined vacuum degree, such as 10² to 10⁴ Pa, by using the vacuumizing system 6, wherein during the vacuumizing, an ultraviolet light cleaner or plasma bombarding device is utilized to act on the tempered glass assembly so as to decompose residual impurities in the inner cavity, and volatile gas generated after decomposition is extracted out of the inner cavity.
(8) The air extraction opening is closed by the closing device 12 to complete the manufacturing of the tempered vacuum glass.

According to the manufacturing method of the present invention, the glass substrates are heated to 60°C to 150°C before the to-be-sealed region is hermetically sealed, which is an important process parameter obtained by the applicant in combination with a large amount of experimental data in the process of continuously improving the tempered vacuum glass manufacturing process. If the glass substrates are soldered directly without heating or at a low heating temperature, since the duration of the peak temperature after the metal solder is melted is short, the metalized layer is not sufficiently soaked by the solder, and the soldering strength is not sufficient; and in the cooling process after stopping heating, since the glass substrates have low temperature and absorb heat quickly, the shrinkage stress produced by the rapid cooling of the solder is large, thereby generating a very large soldering stress. However, if the heating temperature of the glass substrates is too high, for example, greater than 150°C. it is not only unfavorable to enhance the soldering strength, but also the high temperature has a very adverse effect on the metalized layer. The following table measures and compares the soldering strength of the tempered vacuum glass manufactured at the above different heating temperatures with the "anti- 100°C temperature difference shock frequency".

| | | | | | | | | | | | |
|---|---|---|---|---|---|---|---|---|---|---|---|
| | Heating Temperature (°C) | 15 | 25 | 40 | 60 | 80 | 100 | 120 | 150 | 180 | 200 |
| | Sealing Pass Rate (%) | 18 | 28 | 41 | 67 | 81 | 89 | 93 | 96 | 96 | 95 |
| Glass Sample 1 | Anti-100°C Temperature Difference Shock Frequency (times) | 45 | 85 | 100 | 260 | 300 | 500 | 700 | 820 | 820 | 800 |
| | Sealing Pass Rate (%) | 17 | 27 | 40 | 68 | 83 | 90 | 92 | 95 | 94 | 92 |
| Glass Sample 2 | Anti-100°C Temperature Difference Shock Frequency (times) | 40 | 95 | 95 | 270 | 310 | 480 | 700 | 800 | 830 | 790 |
| | Sealing Pass Rate (%) | 19 | 28 | 41 | 69 | 82 | 88 | 92 | 93 | 92 | 91 |
| Glass Sample 3 | Anti-100°C Temperature Difference Shock Frequency (times) | 40 | 80 | 100 | 280 | 315 | 490 | 700 | 800 | 820 | 780 |

| | | | | | | | | | | | |
|---|---|---|---|---|---|---|---|---|---|---|---|
| (Note: The three glass samples are vacuum glass made of 5mm tempered glass, and the glass size is 300mm x 300mm) | | | | | | | | | | | |

According to the above experimental data, it can be seen that after the glass substrate is heated to 60°C to 150°C, the anti-100°C temperature difference shock frequency of the sealed tempered vacuum glass is obviously enhanced, and preferably, the glass substrates are heated to 80°C to 120°C before soldering edge sealing, so that a firm and reliable welding strength can be obtained after soldering edge sealing, thereby extending the service life of the tempered vacuum glass.

Preferably, in step (1), a metalized layer is further preformed on the periphery of the air extraction opening, and before step (7), a closing sheet on which a metal solder is preplaced is covered on the air extraction opening, and the air extraction opening is closed by melting the metal solder preplaced on the closing sheet.

When the glass substrate is a coated glass substrate, the film in the to-be-sealed region of the coated glass substrate is removed before the metalized layer is preformed. During film removal, the production line further comprises a film removing device, and the film removing device may also be separated from the production line and used as a pretreatment process before entering the production line.

Before step (3), a getter is placed on at least one of the glass substrates, and the getter is activated after step (7) is completed.

### Embodiment 2

FIG. 2 shows a second embodiment of the tempered glass production line. In the present embodiment, the structure is basically the same as that of Embodiment 1, except that the soldering edge sealing device 4 is disposed on one side of the first conveyor 9, the glass substrates are pushed into the soldering edge sealing device 4 by a pushing mechanism disposed on the conveyor 9, and the conveying direction of the soldering edge sealing device 4 is perpendicular to the conveying direction of the conveyor 9.

### Embodiment 3

FIG. 3 shows a third embodiment of the tempered glass production line. In the present embodiment, the structure is basically the same as that of Embodiment 2, except that three soldering edge sealing devices 4 are provided. Of course, the number of the soldering edge sealing devices 4 can be increased or decreased according to the working efficiency of each station on the production line. Thus, the multiple soldering edge sealing devices 4 are provided in the most time-consuming soldering edge sealing process on the whole production line so as to enhance the production efficiency, and an arrangement manner that the conveying direction of the soldering edge sealing devices 4 is perpendicular to the conveying direction of the first conveyor 9 is adopted, so that the glass substrate can optionally enter any vacant soldering edge sealing device 4. The vacuum chamber 6-1 (with reference to FIG. 2 or FIG. 1) comprises a front-end auxiliary vacuum chamber 6-11, a main vacuum chamber 6-12 and a rear-end auxiliary vacuum chamber 6-13 which are sequentially connected along the glass conveying direction. The vacuum degree of the front-end auxiliary vacuum chamber 6-11 and the rear-end auxiliary vacuum chamber 6-13 will be lower than that of the main vacuum chamber 6-12, and the vacuumizing efficiency can be improved by this stepped vacuumizing manner. Vacuum valves are disposed among the front-end auxiliary vacuum chamber 6-11, the main vacuum chamber 6-12 and the rear-end auxiliary vacuum chamber 6-13, and on an input end of the front-end auxiliary vacuum chamber 6-11 and an output end of the rear-end auxiliary vacuum chamber 6-13.

### Embodiment 4

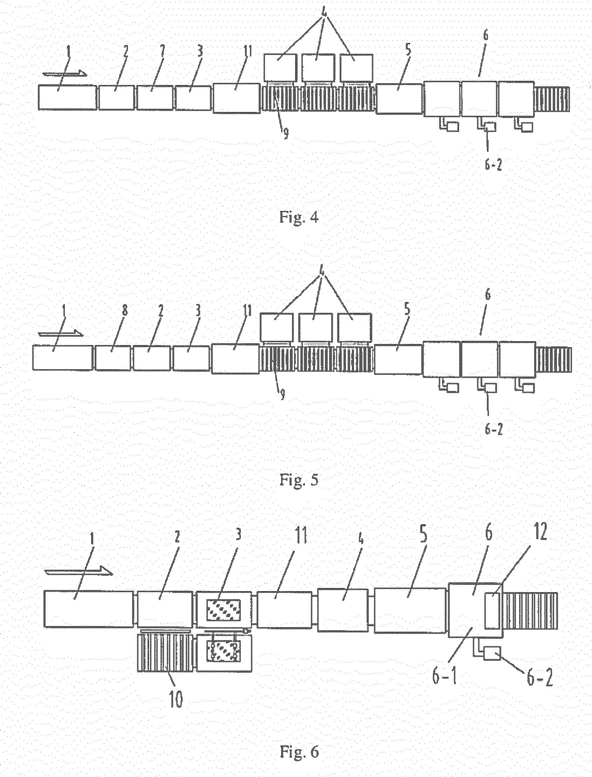

FIG. 4 shows a fourth embodiment of the tempered glass production line. In the present embodiment, the structure is basically the same as that of Embodiment 3, except that a support placement device 7 is disposed at the station between the solder placement device 2 and the first preheater 11 and used for placing the preformed solid middle support onto the glass substrate. Of course, the support placement device 7 may also be disposed at the station between the metalized layer preparation device 1 and the solder placement device 2, or between the first preheater 11 and the superposing device 3.

### Embodiment 5

FIG. 5 and FIG. 11 show a fifth embodiment of the tempered glass production line. In the present embodiment, the structure is basically the same as that of Embodiment 3, except that a support preparation device 8 is disposed between the metalized layer preparation device I and the solder placement device 2. The support preparation device 8 comprises a screen printing device 8-1, a drying device 8-2 and a sintering device 8-3, wherein the drying device 8-2 and the sintering device 8-3 are an integrated device, and the sintering device 8-3 is a glass tempering device. The steps of preparing the middle support by the support preparation device 8 include: firstly, a paste-like glass glaze is printed on predetermined positions on one of the glass substrates to form a dot-like bulge array by using the screen printing device 8-1; and then, the glass glaze is sintered, by using the drying device 8-2 and the sintering device 8-3 by a high-temperature sintering process, into the support that is consolidated with the glass substrate.

### Embodiment 6

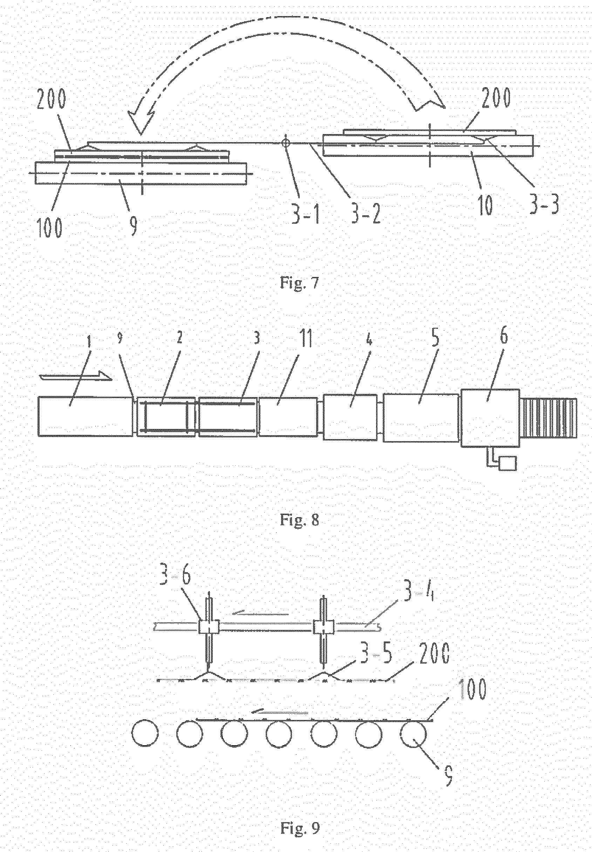

FIG. 6 and FIG. 7 show a sixth embodiment of the tempered glass production line. In the present embodiment, the structure is basically the same as that of Embodiment 1, except that the side surface of the first conveyor 9 is provided with a second conveyor 10, such as a conveying roller bed, the first conveyor 9 is used for conveying a first glass substrate 100, and the second conveyor 10 is used for conveying a second glass substrate 200. The superposing device 3 comprises a rotating shaft 3-1 disposed between the first and second conveyors 9 and 10, and a swing arm 3-2 connected with the rotating shaft 3-1 and inserted under the second glass substrate 200 along a gap of the second conveyor 10, and the swing arm 3-2 is provided with a vacuum suction cup 3-3 or clamping device; and in operation, the vacuum suction cup 3-3 or clamping device captures the second glass substrate 200, turns over the swing arm 3-2 around the rotating shaft 3-1, and places the second glass substrate 200 on the first glass substrate 100 on the first conveyor 9 to complete the superposing.

### Embodiment 7

FIG. 8 and FIG. 9 show a seventh embodiment of the tempered glass production line. In the present embodiment, the structure is basically the same as that of Embodiment 1, expect that the superposing device 3 comprises a suspended transmission device disposed above the first conveyor 9. The suspended transmission device extends upstream and is connected with the station where the first preheater 11 is located, the first conveyor 9 is used for conveying a first glass substrate 100, the suspended transmission device is used for conveying a second glass substrate 200, the suspended transmission device comprises a conveying mechanism 3-4, the conveying mechanism 3-4 is provided with a lifting device 3-6 with a vacuum suction cup 3-5 or clamping device, and the lifting device 3-6 is, for example, a screw lifting mechanism or cylinder; and in operation, the lifting device 3-6 descends, the vacuum suction cup 3-5 or clamping device captures and fixes the second glass substrate 200 on the first conveyor 9 in the station where the solder placement device 2 is located, the lifting device 3-6 ascends, the second glass substrate 200 is conveyed to above the first glass substrate 100 to be superposed, and the second glass substrate 200 is placed on the first glass substrate 100 to complete the superposing.

Of course, the superposing device 3 may also be a multi-degree-of-freedom mechanical arm disposed on one side of the first conveyor 9, and the superposing is completed by the mechanical arm.

For the above-mentioned seven embodiments, the first preheater 11 may also be disposed at the station between the superposing device 3 and the soldering edge sealing device 4 so as to change the processing sequence on the production line, and the two superposed glass substrates are integrally heated.

## Claims

1. A method for manufacturing tempered vacuum glass, wherein an air extraction opening is provided, in advance, on at least one glass substrate for constituting the tempered vacuum glass, and the manufacturing method comprises the following steps:
(1) preparing a metalized layer in a to-be-sealed region on the glass substrate, and tempering or heat-reinforcing the glass substrates;
(2) placing a metal solder on the metalized layer;
(3) preheating and superposing the glass substrates, by one of the following methods:
a. respectively heating the two glass substrates to 60°C to 150°C, disposing the metalized layers of the to-be-sealed regions of the two glass substrates opposite to each other, and superposing the glass substrates such that the metal solder is located between the metalized layers of the to-be-sealed regions; and
b. disposing the metalized layers of the to-be-sealed regions of the two glass substrates opposite to each other, superposing the glass substrates such that the metal solder is located between the metalized layers of the to-be-sealed regions, and integrally heating the two superposed glass substrates to 60°C to 150°C;
(4) hermetically sealing the to-be-sealed regions by a metal brazing process to form a tempered glass assembly, wherein the metal brazing process is adopted to perform local heating on the to-be-sealed region, wherein the heating mode is laser heating, flame heating, current heating, induction heating, microwave heating, radiation heating or convection heating;
(5) heating the tempered glass assembly to 100°C to 230°C;
(6) vacuumizing an inner cavity of the tempered glass assembly to a predetermined vacuum degree; and
(7) closing the air extraction opening and completing the manufacturing process of the vacuum glass.

2. The method for manufacturing tempered vacuum glass according to claim 1, **characterized in that** when the glass substrate is a coated glass substrate, a film in the to-be-sealed region of the coated glass substrate is removed before the metalized layer is preformed.

3. The method for manufacturing tempered vacuum glass according to claim 1, **characterized in that** in step (1), a step of preparing a support for supporting the inner cavity is further included: firstly, a paste-like glass glaze is printed on predetermined positions on one of the glass substrates to form a dot-like bulge array; and then, the glass glaze is sintered, by a high-temperature sintering process, into the support that is consolidated with the glass substrate.

4. The method for manufacturing tempered vacuum glass according to claim 1, **characterized in that** in step (7), the tempered glass assembly is vacuumized in a vacuum chamber, wherein the tempered glass assembly is heated to 100°C to 230°C during vacuumizing.

5. The method for manufacturing tempered vacuum glass according to claim 1, **characterized in that** before the two glass substrates are superposed in step (3), a getter is placed on at least one of the glass substrates, and the getter is activated after step (6) is completed.

6. The method for manufacturing tempered vacuum glass according to claim 1, **characterized in that** in step (1), the metalized layer is further preformed on the periphery of the air extraction opening, and before step (7), a closing sheet on which a metal solder is preplaced is covered on the air extraction opening, and the air extraction opening is closed by melting the metal solder preplaced on the closing sheet.

7. A production line for manufacturing tempered vacuum glass according to any of claims 1 to 6, wherein the production line comprises
a metalized layer preparation device (1), a solder placement device (2), a first preheater (11), a superposing device (3), a soldering edge sealing device (4), a second preheater (5), a vacuumizing system (6) and a closing device (12) which are sequentially connected through a first conveyor (9), or alternatively,
a metalized layer preparation device (1), a solder placement device (2), a superposing device (3), a first preheater (11), a soldering edge sealing device (4), a second preheater (5), a vacuumizing system (6) and a closing device (12) which are sequentially connected through a first conveyor (9);
wherein the first preheater (11) is configured to heat the glass substrates to a temperature between 60°C to 150°C, and the soldering edge sealing device (4) is configured for edge sealing treatment of the glass substrates, there being one or multiple soldering edge sealing devices (4), and the vacuumizing system (6) comprising one or multiple vacuum chambers and an air extractor communicating with the vacuum chamber.

8. The tempered vacuum glass production line according to claim 7, **characterized in that** the superposing device (3) comprises a lifting mechanism (3-6) disposed on one side of the first conveyor (9), the lifting mechanism (3-6) being provided with a lifting arm, the lifting arm being provided with a turnover mechanism, and a vacuum suction cup or clamping device being disposed in the turnover mechanism; and when the superposing device is in operation, the vacuum suction cup or clamping device captures a second glass substrate (200), and the lifting mechanism (3-6) lifts the second glass substrate (200) to a predetermined height, turns it over, and places it on a first glass substrate (100) after the turnover to complete the superposing.

9. The tempered vacuum glass production line according to claim 7 , **characterized in that** aside surface of the first conveyor (9) is provided with a second conveyor (10), the first conveyor (9) being used for conveying the first glass substrate (100), and the second conveyor (10) being used for conveying the second glass substrate (200).

10. The tempered vacuum glass production line according to claim 9, **characterized in that** the superposing device (3) comprises a rotating shaft disposed between the first and second conveyors (9, 10), and a swing arm connected with the rotating shaft and inserted under the second glass substrate (200) along a gap of the second conveyor (10), the swing arm being provided with a vacuum suction cup or clamping device; and in operation, the vacuum suction cup or clamping device captures the second glass substrate (200), turns over the swing arm around the rotating shaft, and places the second glass substrate (200) on the first glass substrate (100) on the first conveyor (9) to complete the superposing.

11. The tempered vacuum glass production line according to claim 7, **characterized in that** the superposing device (3) comprises a suspended transmission device disposed above the first conveyor (9), the suspended transmission device being used for conveying the second glass substrate (200), the suspended transmission device comprising a conveying mechanism (3-4), and the conveying mechanism (3-4) being provided with a lifting device with a vacuum suction cup or clamping device; and in operation, the lifting device descends, the vacuum suction cup or clamping device captures and fixes the second glass substrate (200) on the first conveyor (9), the lifting device ascends, the second glass substrate (200) is conveyed to above the first glass substrate (100) to be superposed, and the second glass substrate (200) is placed on the first glass substrate (100) to complete the superposing.

12. The tempered vacuum glass production line according to claim 7 , **characterized in that** when there are multiple soldering edge sealing devices (4), the soldering edge sealing devices (4) are disposed on one or both sides of the first conveyor (9), the conveying direction of the soldering edge sealing devices (4) being perpendicular to the conveying direction of the first conveyor (9).

13. The tempered vacuum glass production line according to claim 7, **characterized in that** the production line further comprises a glass tempering device, the glass tempering device being disposed at a station between the metalized layer preparation device (1) and the solder placement device (2).

## Patentansprüche

1. Verfahren zur Herstellung von gehärtetem Vakuumglas, wobei eine Luftabzugsöffnung im Voraus auf mindestens einem Glassubstrat zu Bildung des gehärteten Vakuumglases bereitgestellt wird und das Herstellungsverfahren folgende Schritte umfasst:
(1) Vorbereiten einer metallisierten Schicht in einem abzudichtenden Bereich auf dem Glassubstrat und Härten oder Wärmeverstärken der Glassubstrate;
(2) Platzieren eines Metalllots auf der metallisierten Schicht;
(3) Vorwärmen und Übereinanderlegen der Glassubstrate durch eines der folgenden Verfahren:
a. Erwärmen der beiden Glassubstrate auf jeweils 60 °C bis 150 °C, Anordnen der metallisierten Schichten auf den abzudichtenden Bereichen der beiden Glassubstrate einander gegenüber, und Übereinanderlegen der Glassubstrate so, dass sich das Metalllot zwischen den metallisierten Schichten der abzudichtenden Bereiche befindet; und
b. Anordnen der metallisierten Schichten auf den abzudichtenden Bereichen der beiden Glassubstrate einander gegenüber, Übereinanderlegen der Glassubstrate so, dass sich das Metalllot zwischen den metallisierten Schichten der abzudichtenden Bereiche befindet; und gemeinsames Erwärmen der beiden übereinanderliegenden Glassubstrate auf 60 °C bis 150 °C;
(4) hermetisches Abdichten der abzudichtenden Bereiche durch ein Metallhartlötverfahren zum Bilden einer gehärteten Glasanordnung, wobei das Metallhartlötverfahren dazu eingesetzt wird, eine lokale Erwärmung auf dem abzudichtenden Bereich durchzuführen, wobei der Erwärmungsmodus eine Lasererwärmung, Flammenerwärmung, Stromerwärmung, Induktionserwärmung, Mikrowellenerwärmung, Strahlungserwärmung oder Konfektionserwärmung ist;
(5) Erwärmen der gehärteten Glasanordnung auf 100 °C bis 230 °C;
(6) Vakuumieren eines inneren Hohlraums der gehärteten Glasanordnung auf einen vorgegebenen Vakuumgrad; und
(7) Schließen der Luftabzugsöffnung und Abschließen des Herstellungsprozesses des Vakuumglases.

2. Verfahren zur Herstellung von gehärtetem Vakuumglas nach Anspruch 1, **dadurch gekennzeichnet, dass**, wenn das Glassubstrat ein beschichtetes Glassubstrat ist, eine dünne Schicht in dem abzudichtenden Bereich des beschichteten Glassubstrats entfernt wird, bevor die metallisierte Schicht vorgeformt wird.

3. Verfahren zur Herstellung von gehärtetem Vakuumglas nach Anspruch 1, **dadurch gekennzeichnet, dass** in Schritt (1) des Weiteren ein Schritt zum Vorbereiten eines Trägers zum Abstützen des inneren Hohlraums eingeschlossen ist: zuerst wird eine pastenartige Glasglasur an vorgegebenen Positionen auf eines der Glassubstrate gedruckt, um eine punktartige Ausbuchtungsanordnung zu bilden; und anschließend wird die Glasglasur durch einen Hochtemperatursinterprozess in den Träger gesintert, der mit dem Glassubstrat verfestigt wird.

4. Verfahren zur Herstellung von gehärtetem Vakuumglas nach Anspruch 1, **dadurch gekennzeichnet, dass** in Schritt (7) die gehärtete Glasanordnung in einer Vakuumkammer vakuumiert wird, wobei die gehärtete Glasanordnung während des Vakuumierens auf 100 °C bis 230 °C erwärmt wird.

5. Verfahren zur Herstellung von gehärtetem Vakuumglas nach Anspruch 1, **dadurch gekennzeichnet, dass** vor dem Übereinanderlegen der beiden Glassubstrate in Schritt (3) ein Getter auf mindestens einem der Glassubstrate angeordnet wird und der Getter nach Abschluss von Schritt (6) aktiviert wird.

6. Verfahren zur Herstellung von gehärtetem Vakuumglas nach Anspruch 1, **dadurch gekennzeichnet, dass** in Schritt (1) die metallisierte Schicht am Umfang der Luftabzugsöffnung weiter vorgeformt wird, und vor Schritt (7) eine Verschlussplatte, auf der ein Metalllot vorplatziert ist, auf der Luftabzugsöffnung abgedeckt wird, und die Luftabzugsöffnung durch Schmelzen des auf der Verschlussplatte vorplatzierten Metalllots verschlossen wird.

7. Fertigungsstraße zur Herstellung von gehärtetem Vakuumglas nach einem der Ansprüche 1 bis 6, wobei die Fertigungsstraße umfasst
eine Vorrichtung (1) zur Vorbereitung der metallisierten Schicht, eine Vorrichtung (2) zum Platzieren von Lot, eine erste Vorheizung (11), eine Vorrichtung zum Übereinanderlegen (3), eine Vorrichtung (4) zum Abdichten der Lötkante, eine zweite Vorheizung (5), ein Vakuumisierungssystem (6) und eine Verschlussvorrichtung (12), die nacheinander durch einen ersten Förderer (9) oder alternativ verbunden sind,
eine Vorrichtung (1) zur Vorbereitung der metallisierten Schicht, eine Vorrichtung (2) zum Platzieren von Lot, eine Vorrichtung zum Übereinanderlegen (3), eine erste Vorheizung (11), eine Vorrichtung (4) zum Abdichten der Lötkante, eine zweite Vorheizung (5), ein Vakuumisierungssystem (6) und eine Verschlussvorrichtung (12), die nacheinander durch einen ersten Förderer (9) verbunden sind;
wobei der erste Vorwärmer (11) dazu ausgelegt ist, die Glassubstrate auf eine Temperatur zwischen 60 °C bis 150 °C zu erwärmen, und die Vorrichtung (4) zum Abdichten der Lötkante zur Kantenversiegelungsbehandlung der Glassubstrate ausgelegt ist, wobei eine oder mehrere Vorrichtungen (4) zum Abdichten der Lötkante vorhanden sind und das Vakuumisierungssystem (6) eine oder mehrere Vakuumkammern und einen mit der Vakuumkammer in Verbindung stehenden Luftabzug umfasst.

8. Fertigungsstraße für gehärtetes Vakuumglas nach Anspruch 7, **dadurch gekennzeichnet, dass** die Vorrichtung (3) zum Übereinanderlegen einen Hebemechanismus (3-6) umfasst, der auf einer Seite des ersten Förderers (9) angeordnet ist, wobei der Hebemechanismus (3-6) mit einem Hebearm versehen ist, wobei der Hebearm mit einem Wendemechanismus versehen ist, und wobei ein Vakuumsaugnapf oder eine Klemmvorrichtung in dem Wendemechanismus angeordnet ist; und wenn die Überlagerungsvorrichtung in Betrieb ist, der Vakuumsaugnapf oder die Klemmvorrichtung ein zweites Glassubstrat (200) aufnimmt, und der Hebemechanismus (3-6) das zweite Glassubstrat (200) auf eine vorgegebene Höhe anhebt, es umdreht und es nach dem Umdrehen auf ein erstes Glassubstrat (100) legt, um das Übereinanderlegen abzuschließen.

9. Fertigungsstraße für gehärtetes Vakuumglas nach Anspruch 7, **dadurch gekennzeichnet, dass** die Seitenfläche des ersten Förderers (9) mit einem zweiten Förderer (10) versehen ist, wobei der erste Förderer (9) zum Fördern des ersten Glassubstrats (100) verwendet wird und der zweite Förderer (10) zum Fördern des zweiten Glassubstrats (200) verwendet wird.

10. Fertigungsstraße für gehärtetes Vakuumglas nach Anspruch 9, **dadurch gekennzeichnet, dass** die Vorrichtung (3) zum Übereinanderlegen eine Drehwelle, die zwischen dem ersten und zweiten Förderer (9, 10) angeordnet ist, und einen Schwenkarm umfasst, der mit der Drehwelle verbunden ist und unter dem zweiten Glassubstrat (200) entlang einem Spalt des zweiten Förderers (10) eingesetzt ist, wobei der Schwenkarm mit einem Vakuumsaugnapf oder einer Klemmvorrichtung versehen ist; und im Betrieb der Vakuumsaugnapf oder die Klemmvorrichtung das zweite Glassubstrat (200) aufnimmt, den Schwenkarm um die Drehwelle dreht und das zweite Glassubstrat (200) auf den ersten Glassubstrat (100) auf dem ersten Förderer (9) platziert, um das Übereinanderlegen abzuschließen.

11. Fertigungsstraße für gehärtetes Vakuumglas nach Anspruch 7, **dadurch gekennzeichnet, dass** die Vorrichtung (3) zum Übereinanderlegen eine aufgehängte Übertragungsvorrichtung umfasst, die über dem ersten Förderer (9) angeordnet ist, wobei die aufgehängte Übertragungsvorrichtung zum Fördern des zweiten Glassubstrats (200) verwendet wird, die aufgehängte Übertragungsvorrichtung einen Fördermechanismus (3-4) umfasst und der Fördermechanismus (3-4) mit einer Hebevorrichtung mit einem Vakuumsaugnapf oder einer Klemmvorrichtung versehen ist; und im Betrieb die Hebevorrichtung nach unten fährt, der Vakuumsaugnapf oder die Klemmvorrichtung das zweite Glassubstrat (200) auf dem ersten Förderer (9) erfasst und fixiert, die Hebevorrichtung nach oben fährt, das zweite Glassubstrat (200) über das erste Glassubstrat (100) befördert wird, um es übereinanderzulegen, und das zweite Glassubstrat (200) auf das erste Glassubstrat (100) gelegt wird, um das Übereinanderlegen abzuschließen.

12. Fertigungsstraße für gehärtetes Vakuumglas nach Anspruch 7, **dadurch gekennzeichnet, dass**, wenn mehrere Vorrichtungen (4) zum Abdichten der Lötkante vorhanden sind, die Vorrichtungen (4) zum Abdichten der Lötkante auf einer oder beiden Seiten des ersten Förderers (9) angeordnet sind, wobei die Förderrichtung der Vorrichtungen (4) zum Abdichten der Lötkante senkrecht zur Förderrichtung des ersten Förderers (9) verläuft.

13. Fertigungsstraße für gehärtetes Vakuumglas nach Anspruch 7, **dadurch gekennzeichnet, dass** die Produktionslinie weiterhin eine Vorrichtung zum Härten des Glases umfasst, wobei die Vorrichtung zum Härten des Glases an einer Station zwischen der Vorrichtung zur Vorbereitung der metallisierten Schicht (1) und der Vorrichtung zum Platzieren von Lot (2) angeordnet ist.

## Revendications

1. Procédé de fabrication de verre à vide trempé, une ouverture d'extraction d'air étant fournie, au préalable, sur au moins un substrat en verre destiné à constituer le verre à vide trempé, et le procédé de fabrication comprenant les étapes suivantes :
(1) préparation d'une couche métallisée dans une région destinée à être scellée sur le substrat en verre, et trempe ou renforcement par la chaleur des substrats en verre ;
(2) placement d'une brasure métallique sur la couche métallisée ;
(3) préchauffage et superposition des substrats en verre, par l'un des procédés suivants :
a. chauffage respectif des deux substrats en verre jusqu'à une température de 60 °C à 150 °C, disposition des couches métallisées des régions destinées à être scellées des deux substrats en verre à l'opposé l'une de l'autre, et superposition des substrats en verre de sorte que la brasure métallique se trouve entre les couches métallisées des régions destinées à être scellées ; et
b. disposition des couches métallisées des régions destinées à être scellées des deux substrats en verre à l'opposé l'une de l'autre, superposition des substrats en verre de telle sorte que la brasure métallique se trouve entre les couches métallisées des régions destinées à être scellées et chauffage intégral des deux substrats en verre superposés à une température de 60 °C à 150 °C ;
(4) scellement hermétique des régions destinées à être scellées par une opération de brasage métallique pour former un ensemble de verre trempé, l'opération de brasage métallique étant adoptée pour effectuer un chauffage local sur la région destinée à être scellée, le mode de chauffage étant un chauffage au laser, un chauffage à la flamme, un chauffage par résistance, un chauffage par induction, un chauffage par micro-ondes, un chauffage par rayonnement ou un chauffage par convection ;
(5) chauffage de l'assemblage de verre trempé à une température de 100 °C à 230 °C ;
(6) mise sous vide d'une cavité intérieure de l'ensemble de verre trempé à un degré de vide prédéterminé ; et
(7) fermeture de l'ouverture d'extraction d'air et achèvement de l'opération de fabrication du verre à vide.

2. Procédé de fabrication de verre à vide trempé selon la revendication 1, **caractérisé en ce que** lorsque le substrat en verre est un substrat en verre revêtu, un film dans la région destinée à être scellée du substrat en verre revêtu est retiré avant que la couche métallisée soit préformée.

3. Procédé de fabrication de verre à vide trempé selon la revendication 1, **caractérisé en ce qu'**à l'étape (1), une étape de préparation d'un support destiné à supporter une cavité interne est en outre incluse : premièrement, une glaçure de verre pâteuse est imprimée sur des positions prédéterminées sur l'un des substrats en verre pour former un réseau de renflements de type points ; puis, la glaçure de verre est frittée, par une opération de frittage à haute température, dans le support qui est consolidé avec le substrat en verre.

4. Procédé de fabrication de verre à vide trempé selon la revendication 1, **caractérisé en ce qu'**à l'étape (7), l'ensemble de verre trempé est mis sous vide dans une chambre à vide, l'ensemble en verre trempé étant chauffé à une température de 100 °C à 230 °C pendant la mise sous vide.

5. Procédé de fabrication de verre à vide trempé selon la revendication 1, **caractérisé en ce qu'**avant que les deux substrats en verre soient superposés à l'étape (3), un getter est placé sur l'un au moins des substrats en verre, et le getter est activé après que l'étape (6) est terminée.

6. Procédé de fabrication de verre à vide trempé selon la revendication 1, **caractérisé en ce qu'**à l'étape (1), la couche métallisée est en outre préformée sur la périphérie de l'ouverture d'extraction d'air, et avant l'étape (7), une feuille de fermeture sur laquelle est pré-positionnée une brasure métallique est placée en couverture sur l'ouverture d'extraction d'air, et l'ouverture d'extraction d'air est fermée par fusion de la brasure métallique pré-positionnée sur la feuille de fermeture.

7. Ligne de production pour fabriquer du verre à vide trempé selon l'une quelconque des revendications 1 à 6, la ligne de production comprenant
un dispositif de préparation de couche métallisée (1), un dispositif de pose de brasure (2), un premier préchauffeur (11), un dispositif de superposition (3), un dispositif de scellement des bords par brasage (4), un second préchauffeur (5), un système de mise sous vide (6) et un dispositif de fermeture (12) qui sont reliés séquentiellement par le biais d'un premier convoyeur (9), ou, en variante,
un dispositif de préparation de couche métallisée (1), un dispositif de pose de brasure (2), un dispositif de superposition (3), un premier préchauffeur (11), un dispositif de scellement des bords par brasage (4), un second préchauffeur (5), un système de mise sous vide (6) et un dispositif de fermeture (12) qui sont reliés séquentiellement par le biais d'un premier convoyeur (9) ;
le premier préchauffeur (11) étant configuré pour chauffer les substrats en verre à une température entre 60 °C jusqu'à 150 °C, et le dispositif de scellement des bords par brasage (4) étant configuré pour le traitement par scellement des bords des substrats en verre, un ou plusieurs dispositifs de scellement des bords par brasage (4) étant présents, et le système de mise sous vide (6) comprenant une ou plusieurs chambres à vide et un extracteur d'air communicant avec la chambre à vide.

8. Ligne de production de verre à vide trempé selon la revendication 7, **caractérisée en ce que** le dispositif de superposition (3) comprend un mécanisme de levage (3-6) disposé sur un côté du premier convoyeur (9), le mécanisme de levage (3-6) étant pourvu d'un bras de levage, le bras de levage étant pourvu d'un mécanisme de retournement, et une ventouse ou un dispositif de serrage étant disposé(e) dans le mécanisme de retournement ; et lorsque le dispositif de superposition est en fonctionnement, la ventouse ou le dispositif de serrage capture un second substrat en verre (200), et le mécanisme de levage (3-6) soulève le second substrat en verre (200) à une hauteur prédéterminée, le retourne et le place sur un premier substrat en verre (100) après le retournement pour achever la superposition.

9. Ligne de production de verre à vide trempé selon la revendication 7, **caractérisée en ce que** qu'une surface latérale du premier convoyeur (9) est pourvue d'un second convoyeur (10), le premier convoyeur (9) étant utilisé pour transporter le premier substrat en verre (100), et le second convoyeur (10) étant utilisé pour transporter le second substrat en verre (200).

10. Ligne de production de verre à vide trempé selon la revendication 9, **caractérisée en ce que** le dispositif de superposition (3) comprend un arbre rotatif disposé entre les premier et second convoyeurs (9, 10), et un bras mobile relié à l'arbre rotatif et inséré sous le second substrat en verre (200) le long d'un espace du second convoyeur (10), le bras mobile étant pourvu d'une ventouse ou d'un dispositif de serrage ; et en fonctionnement, la ventouse ou le dispositif de serrage capture le second substrat en verre (200), retourne le bras mobile autour de l'arbre rotatif et place le second substrat en verre (200) sur le premier substrat en verre (100) sur le premier convoyeur pour achever la superposition.

11. Ligne de production de verre à vide trempé selon la revendication 7, **caractérisée en ce que** le dispositif de superposition (3) comprend un dispositif de transmission suspendu disposé au-dessus du premier convoyeur (9), le dispositif de transmission suspendu étant utilisé pour transporter le second substrat en verre (200), le dispositif de transmission suspendu comprenant un mécanisme transporteur (3-4), et le mécanisme transporteur (3-4) étant pourvu d'un dispositif de levage avec une ventouse ou un dispositif de serrage ; et en fonctionnement, le dispositif de levage descend, la ventouse ou le dispositif de serrage capture et fixe le second substrat en verre (200) sur le premier convoyeur (9), le dispositif de levage monte, le second substrat en verre (200) est transporté jusqu'au-dessus du premier substrat en verre (100) pour être superposé, et le second substrat en verre (200) est placé sur le premier substrat en verre (100) pour achever la superposition.

12. Ligne de production de verre à vide trempé selon la revendication 7, **caractérisée en ce que** quand il existe plusieurs dispositifs de scellement des bords par brasage (4), les dispositifs de scellement des bords par brasage (4) sont disposés sur un ou les deux côtés du premier convoyeur (9), le sens de transport des dispositifs de scellement des bords par brasage (4) étant perpendiculaire au sens de transport du premier convoyeur (9).

13. Ligne de production de verre à vide trempé selon la revendication 7, **caractérisée en ce que** la ligne de production comprend en outre un dispositif de trempe de verre, le dispositif de trempe de verre étant disposé au niveau d'un poste entre le dispositif de préparation de couche métallisée (1) et le dispositif de pose de brasure (2).
